# EUROPEAN PATENT SPECIFICATION

(11) **EP 2 230 814 B1**
(45) Date of publication and mention of the grant of the patent: **28.11.2012**
(21) Application number: 08859589.7
(22) Date of filing: 04.12.2008
(51) Int. Cl.: H04L 29/06, H04M 3/428

(54) **METHOD FOR REALIZING A CALL HOLD**
VERFAHREN ZUR REALISIERUNG EINES HALTENS EINES ANRUFS
PROCÉDÉ POUR RÉALISER UNE MISE EN ATTENTE

(30) Priority: 04.12.2007 CN 200710193853
(43) Date of publication of application: 22.09.2010
(73) Proprietor: Huawei Technologies Co., Ltd., Longgang District, Shenzhen Guangdong 518129 (CN)
(72) Inventor: LONG, Shuiping, Guangdong 518129 (CN); JIN, Hui, Guangdong 518129 (CN)
(74) Representative: Isarpatent
(86) International application number: PCT/CN2008/073331
(87) International publication number: WO 2009/074103

(56) References cited:
- WO-A2-2007/093740
- WO-A2-2007/093740
- CN-A- 1 556 644
- CN-A- 1 832 517
- CN-A- 1 960 401
- "Digital cellular telecommunications system (Phase 2+); Universal Mobile Telecommunications System (UMTS); IP Multimedia Subsystem (IMS); Stage 2 (3GPP TS 23.228 version 7.7.0 Release 7); ETSI TS 123 228", ETSI STANDARDS, LIS, SOPHIA ANTIPOLIS CEDEX, FRANCE, vol. 3-SA2, no. V7.7.0, 1 March 2007 (2007-03-01), XP014037758, ISSN: 0000-0001

## Description

### FIELD OF THE INVENTION

The present invention relates to the communication field, and in particular, to a method and device for holding calls under an IMS Centralized Service (ICS, where IMS is an acronym of IP Multimedia Subsystem).

### BACKGROUND

If User Equipment (UE) is capable of accessing only a Circuit Switched (CS) domain network, or if a Packet Switched (PS) domain access network that the UE can access does not support real-time voice or video media, the control bit of the ICS of the 3rd Generation Partnership Project (3GPP) enables the UE to bear voice or video media through a CS domain network and set up an IMS call, and an application server in the IMS provides services for the call. In order for the UE to bear voice or video media through a CS domain network, a CS domain call is set up between the UE and the newly introduced IMS CS Control Function (ICCF). That is, the UE performs an IMS call through a CS access call leg. Meanwhile, the service processing logic in a Visited Mobile Switching Center (VMSC) is weakened or removed. Through a newly introduced IMS CS Control Channel (ICCC), the UE receives and sends the control signaling relative to the IMS call. The ICCC may be carried through an Unstructured Supplementary Service Data (USSD, which is a message communication mechanism in a CS domain network) or a PS domain call (namely, another IMS call).

Call holding means that the UE holds a current call and sets up a new call at the same time. In order to implement call holding on a UE, the CS network provides a service feature: Service Change and Unstructured Data Information Fallback (SCUDIF) feature. Unstructured Data Information (UDI) is a bearing capability of the CS network, namely, the UE can send data at a rate of 64 Kbps. A typical application of this bearing capability is video calls. Service change enables the UE to shift between a voice call and a video call in the call process without interrupting the call. Fallback enables the UE to set up a voice call when the UE fails in an attempt of setting up a video call, and ensures successful setup of a conversation.

According to the SCUDIF feature, the ICS Project provides a call hold service solution. The call hold process under the solution is described as follows:

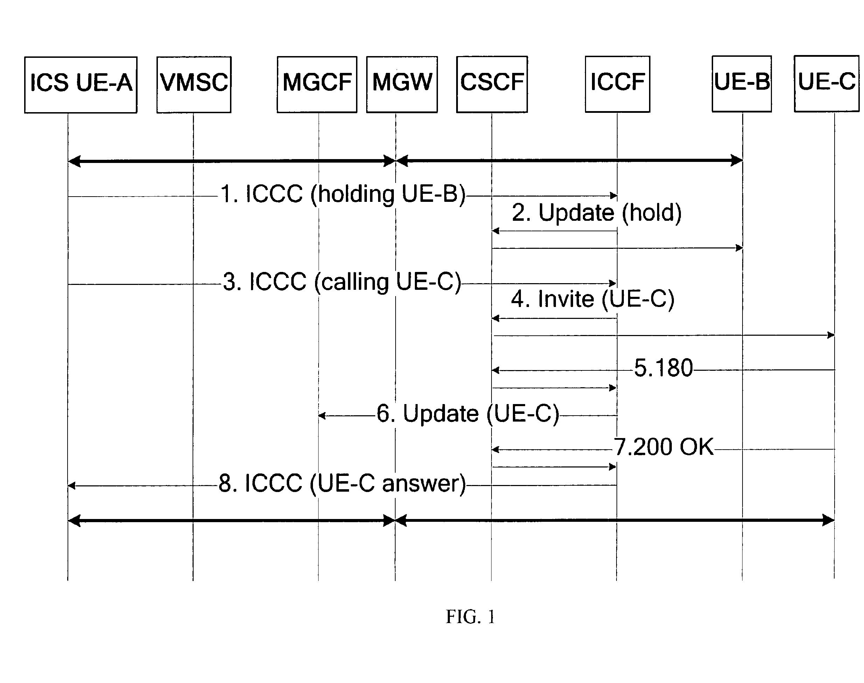

FIG. 1 shows a call hold process. The following describes components in FIG. 1.
The ICS UE-A is an enhanced UE that supports ICCC. At the beginning, UE-A and UE-B perform the first call through a CS access call leg. The signaling endpoint of the CS access call leg is an ICCF, but the media stream endpoint is a Media Gateway Control Function (MGCF). Therefore, the media connection of the first call includes two parts: CS media connection (from UE-A to an MGW, where MGW is an acronym of Media Gateway) and IP media connection (from the MGW to UE-B). The MGW implements conversion between UE-A and UE-B. It is to be noted that an IMS Telephone Application Server (TAS) exists in the signaling path between the ICCF and UE-B, and between the ICCF and UE-C, but is not illustrated in FIG. 1. The TAS performs the operations such as controlling media resource functions, playing a call hold announcement, and collecting charging events. The embodiments of the present invention do not need to enhance the TAS, and therefore, TAS is not mentioned in the following texts or drawings any more.

As shown in FIG. 1, a call hold process in the ICS is as follows:
1. Through the ICCC, UE-A sends a request for holding the current call to the ICCF.
2. The ICCF sends a call hold request to UE-B. The request may be sent through a Session Initiation Protocol (SIP) re-Invite message or an Update message.
3. UE-A sends a request for calling UE-C to the ICCF.
4. The ICCF sends a call request (Invite) to UE-C. The call request carries media information of the IP media connection port of the MGW. The media information is stored in the ICCF in the process of setting up the previous call.
5. UE-C provides an indication, indicating that it is ringing and waiting for an answer from the user.
6. The ICCF sends the media information of UE-C to the MGCF through an Update message. The MGCF instructs the MGW to connect UE-C.
7. UE-C instructs the user to answer the call, and sends a 200 OK to the ICCF.
8. Through an ICCC, the ICCF indicates that the call is answered.

The basic idea of the foregoing solution in the prior art is: The CS media connection is reused, and the IP media connection peer of the MGW may be either UE-B or UE-C. However, it is applicable to the scenario with only two voice calls or two video calls but not applicable to the scenario with two different calls because different calls require different CS media connections.

A Chinese patent application (Publication No.: CN1832517A) discloses a method for implementing new services based on H428 protocol in a network in which barrier and control are separate. In the method, a first UE initiates a call request to a second UE, a MGC (Media Gateway Controller) indicates a MG (Media Gateway) to assign media resources to the two UEs, and to generate a first context of the media resources. And when the second UE answers the call request, the call between the first UE and the second UE is established.

The first UE initiates a request for holding the call with the second UE and calling a third UE. The MGC indicates the MG to move the media resource assigned to the first UE from the first context to a new second context.

The MGC indicates the MG to assign media resource to the third UE and add the media resource assigned to the third UE to the second context. And then the call between the first UE and the third UE is established.

A PCT patent application (Publication No.: WO 2007/093740A2) discloses a communication control method. In the method, a telephone or multimedia communication has been setup between a first terminal T1 of a first user use and a second terminal T2 of a second user. When action taken on T1 is likely to put T2 on hold, a proposal will automatically be made to T1 or a first additional terminal TA1 of the first user and/or to T2 or a second additional terminal TA2 of the second user, to setup an instant messaging communication.

### SUMMARY

The embodiments of the present invention provide a method and device for holding calls to hold two calls of different media types.

A method for holding calls under an IP Multimedia Subsystem, IMS, centralized service includes:
performing, by a first UE, a first call with a second UE through a first CS access call leg,
wherein a signaling endpoint of the first CS access call leg is an ICCF, and the first CS access call leg supports a first media type;
sending, by the first UE, an ICCC request to hold the first call;
sending, by the first UE, an ICCC request to initiate a second call with a third UE; and performing the second call with the third UE through a second CS access call leg, wherein the second CS access call leg supports a second media type;
wherein the sending, by the first UE, the ICCC request to initiate the second call with the third UE comprises:
   sending a call request for calling the third UE to the ICCF via the ICCC; and by the first UE, changing the first media type supported by the first CS access call leg to the second media type and obtain the second CS access call leg, after the ICCF sends the call request to the third UE and controls the first CS access call leg to set up a media connection with the third UE; or
   sending a call request for calling the third UE to the ICCF via the ICCC; and by the first UE, changing the first media type supported by the first CS access call leg to the second media type, and obtaining the second CS access call leg, wherein the ICCF is adapted to send the call request to the third UE, and control the second CS access call leg to set up a media connection with the third UE after the first UE changes the first media type supported by the first CS access call leg to the second media type.

A method for holding calls under an IP Multimedia Subsystem, IMS, centralized service includes:
holding a first call between a first UE and a second UE according to an ICCC request from the first UE;
receiving a call request from the first UE, wherein a media type in the call request is different from a media type of the first call; and
initiating a second call between the first UE and a third UE according to the call request

A UE for holding calls under an IP Multimedia Subsystem, IMS, centralized service includes:
a first call performing unit, adapted to perform a first call with a second UE through a first CS access call leg, wherein a signaling endpoint of the first CS access call leg is an ICCF and the first CS access call leg supports a first media type;
a holding unit, adapted to send an IMS CS Control Channel (ICCC) request to hold the first call;
a second call initiating unit, adapted to send an ICCC request to initiate a second call with a third; and
a second call performing unit, adapted to perform the second call with the third UE through a second CS access call leg that supports a second media type.

Through the method and the device for holding calls in an embodiment of the present invention, when a first call is being performed between the UE and a second UE through a first CS access call leg, the UE performs a second call with a third UE through a second CS access call leg; the media type supported by the first CS access call leg is different from the media type supported by the second CS access call leg. In this way, two calls of different media types can be held.

### BRIEF DESCRIPTION OF THE DRAWINGS

FIG. 1 is a flowchart of holding calls in the prior art;
FIG. 2 is a flowchart of holding calls in the first embodiment of the present invention;
FIG. 3 is a flowchart of holding calls in the second embodiment of the present invention;
FIG. 4 is a flowchart of holding calls in the third embodiment of the present invention;
FIG. 5 is a flowchart of holding calls in the fourth embodiment of the present invention;
FIG. 6 is a flowchart of holding calls in the fifth embodiment of the present invention;
   and
FIG. 7 is a flowchart of holding calls in the sixth embodiment of the present invention.

### DETAILED DESCRIPTION OF THE EMBODIMENTS

Before elaborating the solution under the present invention, a term is introduced:
Service Change and UDI Fallback (SCUDIF): a CS network service feature, in which, service change enables a UE to shift between a voice call and a video call in a call process without interrupting the call, and fallback enables the UE to set up a voice call after failing in an attempt to setting up a video call and ensures call setup.

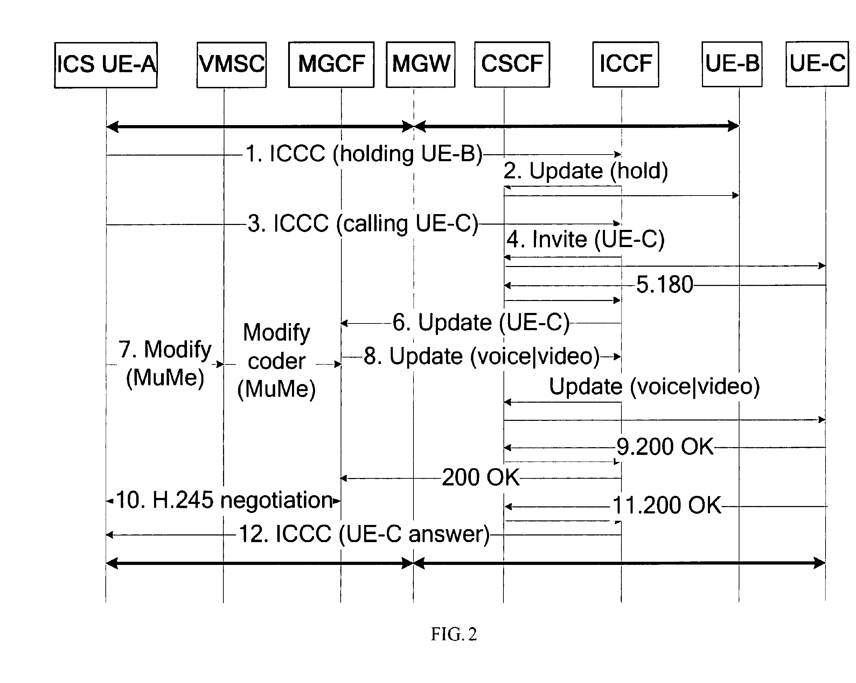

FIG. 2 is a flowchart of holding calls in the first embodiment of the present invention. In this flowchart, a video call is set up when a voice call is underway, and the existing voice call is still held. Compared with the prior art (illustrated in FIG. 1), this flowchart includes new steps: steps 7-11.

UE-A and UE-B perform a voice call through a first CS access call leg. The first CS access call leg is set up between UE-A and an ICCF. The signaling endpoint of the first CS access call leg is the ICCF, but the media stream endpoint is an MGCF. Therefore, the media connection of the voice call includes two parts: CS media connection (from UE-A to an MGW) and IP media connection (from the MGW to UE-B). The first CS access call leg supports the first media type, namely, voice.
1. Through the ICCC, UE-A sends a request for holding the current call to the ICCF.
2. The ICCF sends a call hold request to UE-B. The request may be sent through a SIP re-Invite message or an Update message.
3. UE-A sends a request for calling UE-C to the ICCF.
4. The ICCF sends a call request (Invite) to UE-C. The call request carries media information of the IP media connection port of the MGW. The media information is stored in the ICCF in the process of setting up the previous call.
5. UE-C provides an indication, indicating that it is ringing and waiting for an answer from the user.
6. The ICCF sends the media information of UE-C to the MGCF through an Update message. The MGCF instructs the MGW to connect UE-C.
7. UE-A sends a request for changing a CS call mode to a VMSC network, requesting changing the CS voice call to a CS multimedia call. Through a message between core networks, the VMSC sends a request for changing the CS call mode to the MGCF.
8. The MGCF generates a SIP media negotiation message to the ICCF, requesting adding video media type to be supported. Through a CSCF, the ICCF sends a media negotiation message to UE-C.
9. UE-C accepts the request for adding the media type, and returns a 200 OK response. The ICCF forwards the response.
10. The MGCF and UE-A perform inband H.245 negotiation (inband interaction refers to interaction performed through a data channel rather than a signaling path, and therefore, the MGCF needs to perform the negotiation by interacting through an MGW).
11. UE-C instructs the ICCF that the user has answered the call by sending a 200 OK to the ICCF.
12. Through an ICCC, the ICCF indicates that the call is answered.

UE-A performs the second call with UE-C through a second CS access call leg that supports a second media type. The second CS access call leg is set up between UE-A and an ICCF. The signaling endpoint of the second CS access call leg is the ICCF, but the media stream endpoint is an MGW. Therefore, the media connection of the voice call includes two parts: CS media connection (from UE-A to the MGW) and IP media connection (from the MGW to UE-C). The second CS access call leg supports the second media type, namely, multimedia.

Steps 7-10 are a process of using UE-A to initiate change of the CS media connection. In this solution, the ICCF does not need to be modified on the basis of the protocol, but UE-A needs to be enhanced on the basis of the protocol. The enhancement is as follows: A call hold application determines that the new call is of a different media type, and can initiate change of the CS media connection, namely, change the voice media connection to a media connection that supports both voice and video. UE-A uses an SCUDIF feature.

Alternatively, the ICCF initiates the CS media connection change, namely, change the voice media connection to a media connection that supports both voice and video. The ICCF needs to be enhanced on the basis of the protocol. The enhancement is as follows: A call hold application determines that the new call is of a different media type, and can initiate change of the CS media connection, namely, change the voice media connection to a media connection that supports both voice and video.

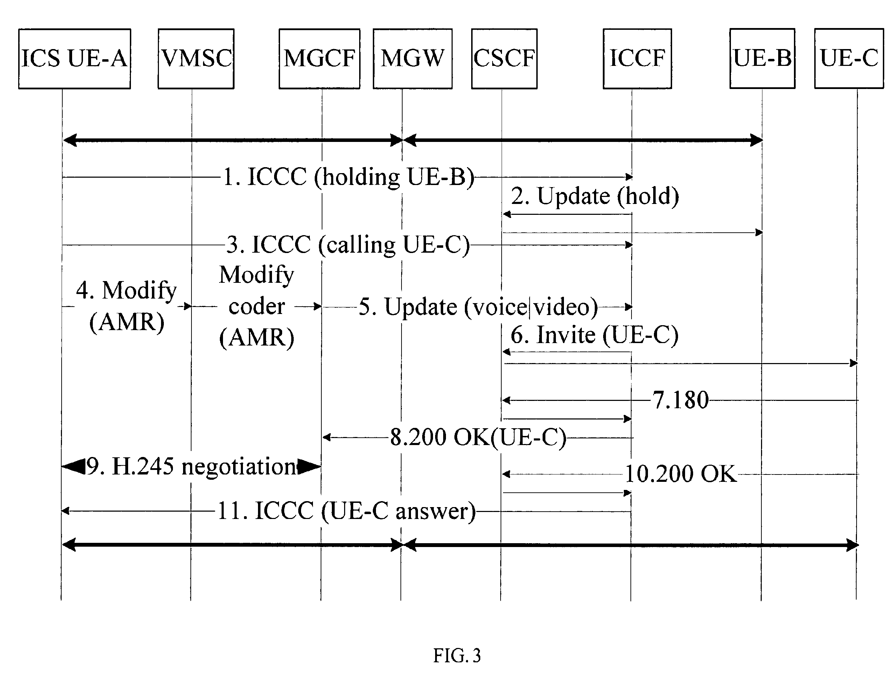

FIG. 3 is a flowchart of holding calls in the second embodiment of the present invention. In this flowchart, a video call is set up when a voice call is underway, and the existing voice call is still held. This embodiment differs from the first embodiment in that: In step 3, after the ICCF receives the call request of a new media type of UE-A, the ICCF waits for a media negotiation request (that carries the new media information of the MGW) from the MGCF. After receiving the media negotiation request, the ICCF sends a call request to UE-C.
1. Through the ICCC, UE-A sends a request for holding the current call to the ICCF.
2. The ICCF sends a call hold request to UE-B. The request may be sent through a SIP re-Invite message or an Update message.
3. UE-A sends a request for calling UE-C to the ICCF, indicating that the call is of a new media type.
4. UE-A sends a request for changing a CS call mode to a VMSC network, requesting changing the CS voice call to a CS multimedia call. Through a message between core networks, the VMSC sends a request for changing the CS call mode to the MGCF.
5. The MGCF generates a SIP media negotiation message to the ICCF, requesting adding video media type to be supported.
6. The ICCF sends a call request (Invite) to UE-C. The call request carries the new media information of the MGW.
7. UE-C provides an indication, indicating that it is ringing and waiting for an answer from the user.
8. The ICCF indicates to the MGCF that the request for adding the media type is accepted.
9. The MGCF and UE-A perform inband H.245 negotiation (inband interaction refers to interaction performed through a data channel rather than a signaling path, and therefore, the MGCF needs to perform the negotiation by interacting through an MGW).
10. UE-C instructs the ICCF that the user has answered the call by sending a 200 OK to the ICCF.
11. Through an ICCC, the ICCF indicates that the call is answered.

In the foregoing solution, the ICCF needs to be modified. After a call request of the new media type (indicated in the message sent in step 3) is received from UE-A, the ICCF waits for a media negotiation request (that carries the new media information of the MGW) from the MGCF. After receiving the media negotiation request, the ICCF sends a call request to UE-C. UE-A requires enhancement. That is, a call hold application determines that the new call is of a different media type, and can initiate change of the CS media connection, namely, change the voice media connection to a media connection that supports both voice and video. UE-A uses an SCUDIF feature. Same as in the first embodiment, the change of the CS media connection may be initiated by the ICCF.

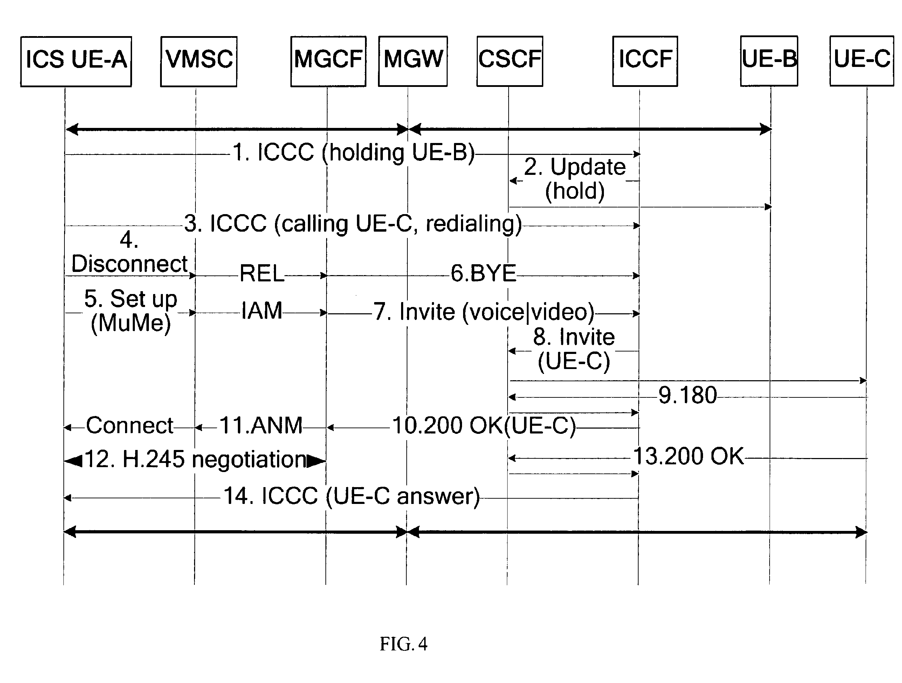

FIG. 4 is a flowchart of holding calls in the third embodiment of the present invention. In this flowchart, a video call is set up when a voice call is underway, and the existing voice call is still held. This embodiment differs from the second embodiment in that: The first CS access call leg is released first, and then the second CS access call leg is set up.
1. Through the ICCC, UE-A sends a request for holding the current call to the ICCF.
2. The ICCF sends a call hold request to UE-B. The request may be sent through a SIP re-Invite message or an Update message.
3. UE-A sends a request for calling UE-C to the ICCF.
4. UE-A requests the VMSC to release the current call, and the VMSC sends a release request to the MGCF.
5. The MGCF generates a SIP session release request to the ICCF.
6. The UE-A sends a request for initiating a multimedia call (voice and video) to the VMSC, and the VMSC sends a call request to the MGCF.
7. The MGCF generates a SIP multimedia session invitation and sends it to the ICCF.
8. The ICCF sends a call request (Invite) to UE-C. The call request carries the new media information of the MGW.
9. UE-C provides an indication, indicating that it is ringing and waiting for an answer from the user.
10. The ICCF indicates to the MGCF that the session invitation is accepted.
11. The MGCF indicates to the VMSC that the call request is accepted, and the VMSC indicates to the UE-A that the call is accepted.
12. The MGCF and UE-A perform inband H.245 negotiation (inband interaction refers to interaction performed through a data channel rather than a signaling path, and therefore, the MGCF needs to perform the negotiation by interacting through an MGW).
13. UE-C instructs the ICCF that the user has answered the call by sending a 200 OK to the ICCF.
14. Through an ICCC, the ICCF indicates that the call is answered.

This embodiment differs from the second embodiment in that UE-A needs to be enhanced in these aspects: A call hold application determines that the new call is of a different media type and can initiate release of the first CS access call leg, and UE-A uses an SCUDIF feature. Alternatively, the ICCF initiates release of the first CS access call leg.

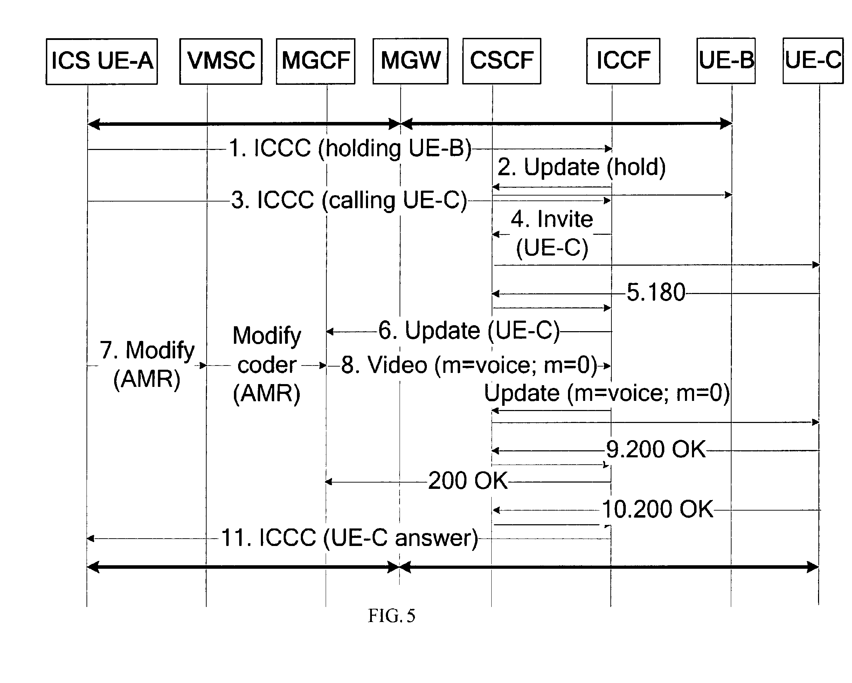

FIG. 5 is a flowchart of holding calls in the fourth embodiment of the present invention. This embodiment differs from the first embodiment in that: The holding of an existing video call at the time of initiating a voice call involves no H.245 negotiation process.
1. Through the ICCC, UE-A sends a request for holding the current call to the ICCF.
2. The ICCF sends a call hold request to UE-B. The request may be sent through a SIP re-Invite message or an Update message.
3. UE-A sends a request for calling UE-C to the ICCF.
4. The ICCF sends a call request (Invite) to UE-C. The call request carries media information of the IP media connection port of the MGW. The media information is stored in the ICCF in the process of setting up the previous call.
5. UE-C provides an indication, indicating that it is ringing and waiting for an answer from the user.
6. The ICCF sends the media information of UE-C to the MGCF through an Update message. The MGCF instructs the MGW to connect UE-C.
7. UE-A sends a request for changing a CS call mode to a VMSC network, requesting changing the CS voice call to a CS multimedia call. Through a message between core networks, the VMSC sends a request for changing the CS call mode to the MGCF.
8. The MGCF generates a SIP media negotiation message to the ICCF, requesting adding video media type to be supported. Through a CSCF, the ICCF sends a media negotiation message to UE-C.
9. UE-C accepts the request for adding the video media type, and returns a 200 OK response. The ICCF forwards the response.
10. UE-C instructs the ICCF that the user has answered the call by sending a 200 OK to the ICCF.
11. Through an ICCC, the ICCF indicates that the call is answered.

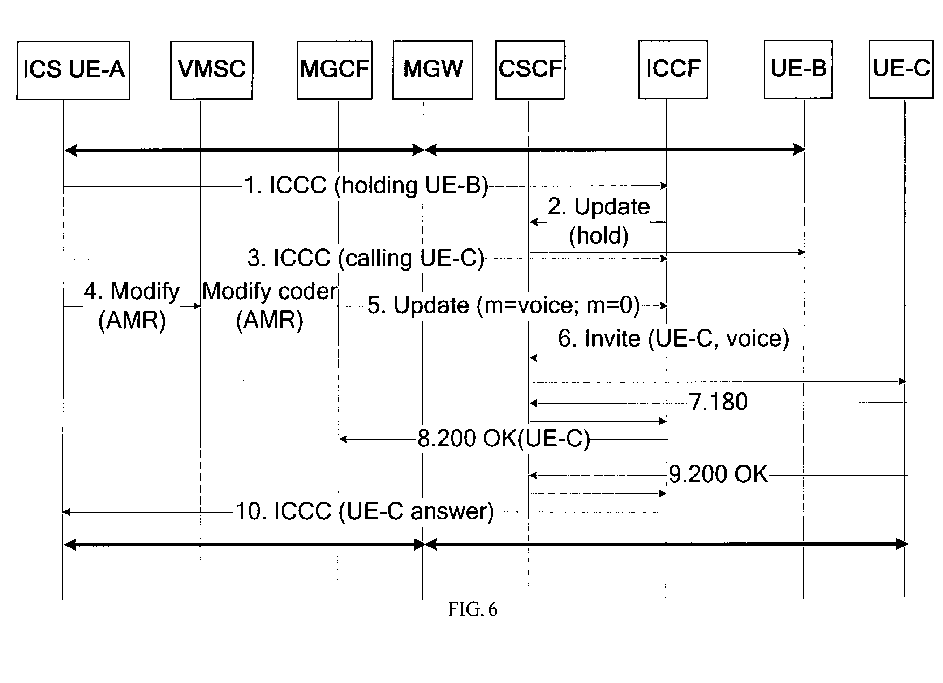

FIG. 6 is a flowchart of holding calls in the fifth embodiment of the present invention. This embodiment differs from the second embodiment in that: The holding of an existing video call at the time of initiating a voice call involves no H.245 negotiation process.
1. Through the ICCC, UE-A sends a request for holding the current call to the ICCF.
2. The ICCF sends a call hold request to UE-B. The request may be sent through a SIP re-Invite message or an Update message.
3. UE-A sends a request for calling UE-C to the ICCF, indicating that the call is of a new media type.
4. UE-A sends a request for changing a CS call mode to a VMSC network, requesting changing the CS voice call to a CS multimedia call. Through a message between core networks, the VMSC sends a request for changing the CS call mode to the MGCF.
5. The MGCF generates a SIP media negotiation message to the ICCF, requesting adding video media type to be supported.
6. The ICCF sends a call request (Invite) to UE-C. The call request carries the new media information of the MGW.
7. UE-C provides an indication, indicating that it is ringing and waiting for an answer from the user.
8. The ICCF indicates to the MGCF that the request for adding video media type is accepted.
9. UE-C instructs the ICCF that the user has answered the call by sending a 200 OK to the ICCF.
10. Through an ICCC, the ICCF indicates that the call is answered.

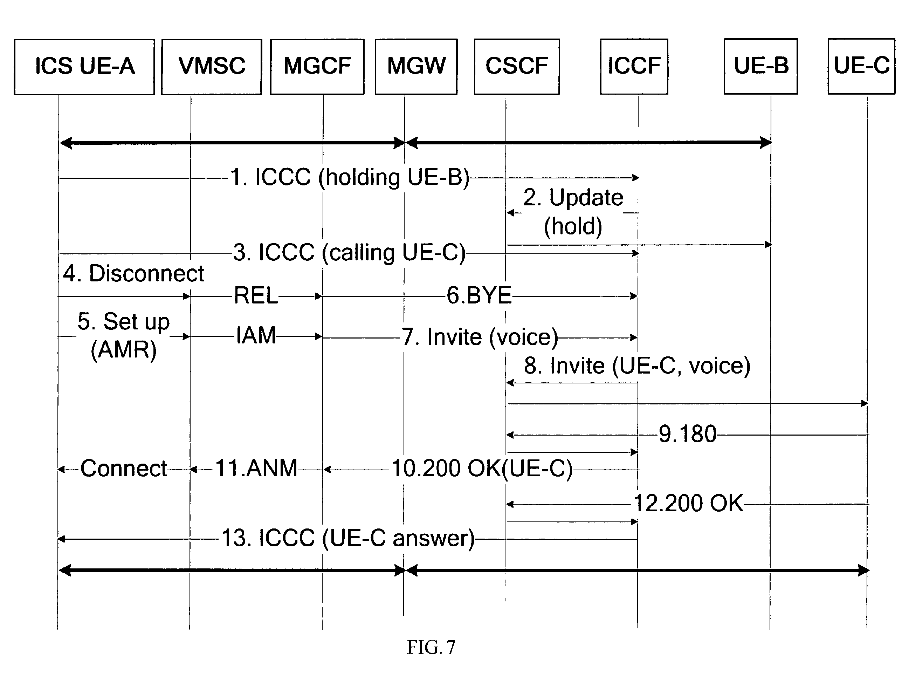

FIG. 7 is a flowchart of holding calls in the sixth embodiment of the present invention. This embodiment differs from the third embodiment in that: The holding of an existing video call at the time of setting up a voice call involves no H.245 negotiation process.
1. Through the ICCC, UE-A sends a request for holding the current call to the ICCF.
2. The ICCF sends a call hold request to UE-B. The request may be sent through a SIP re-Invite message or an Update message.
3. UE-A sends a request for calling UE-C to the ICCF.
4. UE-A requests the VMSC to release the current call, and the VMSC sends a release request to the MGCF.
5. The MGCF generates a SIP session release request to the ICCF.
6. The UE-A sends a request for initiating a multimedia call (voice and video) to the VMSC, and the VMSC sends a call request to the MGCF.
7. The MGCF generates a SIP multimedia session invitation and sends it to the ICCF.
8. The ICCF sends a call request (Invite) to UE-C. The call request carries the new media information of the MGW.
9. UE-C provides an indication, indicating that it is ringing and waiting for an answer from the user.
10. The 1CCF indicates to the MGCF that the session invitation is accepted.
11. The MGCF indicates to the VMSC that the call request is accepted, and the VMSC indicates to the UE-A that the call is accepted.
12. UE-C instructs the ICCF that the user has answered the call by sending a 200 OK to the ICCF.
13. Through an ICCC, the ICCF indicates that the call is answered.

A control device for holding calls is provided in an embodiment of the present invention. The control device may be independent, or integrated in a network control device such as ICCF. The control device includes:
a holding unit, adapted to hold a first call between a first UE and a second UE;
a receiving unit, adapted to receive a call request from the first UE when the holding unit holds the first call, where a media type in the call request is different from a media type of the first call; and
a controlling unit, adapted to initiate a second call between the first UE and a third UE according to a call request received by the receiving unit, whereupon the second call goes on between the first UE and the third UE.

The controlling unit may include a call mode changing unit, adapted to: change the CS call mode according to the media type in the call request to obtain a second CS access call leg, and initiate the second call.

The first UE performs the first call with the second UE through a first CS access call leg that supports a first media type. In this case, the controlling unit may include:
a releasing unit, adapted to release the first CS access call leg between the ICCF and the first UE; and
an initiating unit, adapted to initiate a second CS access call legwith the first UE so as to initiate the second call, where the second CS access call leg supports a second media type.

A control device for holding calls is provided in an embodiment of the present invention. The control device may be independent, or integrated in a network control device such as ICCF. The control device includes:
a receiving unit, adapted to receive a media negotiation request from an MGCF after the first UE initiates change of the CS call mode, where the media negotiation request carries new media information of the MGW; and
a sending unit, adapted to send a call request to a third UE after the receiving unit receives the media negotiation request.

Another control device for holding calls is provided in an embodiment of the present invention. The control device may be independent, or integrated in a network control device such as ICCF. The control device includes:
a receiving unit, adapted to receive a media negotiation request from an MGCF after the first UE initiates change of the CS call mode, where the media negotiation request carries new media information of the MGW; and
a sending unit, adapted to send a call request to a third UE after the receiving unit receives the media negotiation request.

Another control device for holding calls is provided in an embodiment of the present invention. The control device may be independent, or integrated in a network control device such as ICCF. The control device includes:
a holding unit, adapted to hold a first call between a first UE and a second UE;
a receiving unit, adapted to receive a call request from the first UE when the holding unit holds the first call, where a media type in the call request is different from a media type of the first call; and
a controlling unit, adapted to initiate CS call mode change after the receiving unit receives a call request.

Another control device for holding calls is provided in an embodiment of the present invention. The control device may be independent, or integrated in a network control device such as an ICCF. The control device includes:
a holding unit, adapted to hold a first call between a first UE and a second UE, where the first UE performs the first call with the second UE through a first CS access call leg, and the first CS access call leg supports a first media type;
a receiving unit, adapted to receive a call request from the first UE when the holding unit holds the first call, where the media type in the call request is a second media type; and
a controlling unit, adapted to: release the first CS access call leg after the receiving unit receives the call request, and initiates a second CS access call leg with the first UE, where the second CS access call leg supports the second media type.

A UE for holding calls is provided in an embodiment of the present invention. The UE includes:
a first call performing unit, adapted to perform a first call with a second UE through a first CS access call leg, where a signaling endpoint of the first CS access call leg is an ICCF and the first CS access call leg supports a first media type;
a holding unit, adapted to hold the first call according to an ICCC request;
a second call initiating unit, adapted to initiate a second call with a third UE according to the ICCC request; and
a second call performing unit, adapted to perform the second call with the third UE through a second CS access call leg that supports a second media type.

The second call initiating unit may include:
a call unit, adapted to initiate a call request for calling a third UE according to the ICCC request; and
a changing unit, adapted to change the CS call mode so as to obtain the second CS access call leg and initiate the second call.

The second call initiating unit may include:
a call unit, adapted to initiate a call request for calling a third UE according to the ICCC request; and
a releasing unit, adapted to release the first CS access call leg; and
an initiating unit, adapted to initiate a second CS access call leg with the ICCF, where the second CS access call leg supports the second media type.

Another UE for holding calls is provided in an embodiment of the present invention. The UE includes:
a holding unit, adapted to send a first call hold request to an ICCF, where the first call hold request is designed to hold a first call between the UE and a second UE, the UE performs the first call with the second UE through a first CS access call leg, and the first CS access call leg supports a first media type;
a calling unit, adapted to send a call request to the ICCF after the holding unit sends the first call hold request, where the media type in the call request is a second media type; and
a controlling unit, adapted to initiate CS call mode change after the calling unit sends the call request.

Another UE for holding calls is provided in an embodiment of the present invention. The UE includes:
a holding unit, adapted to send a first call hold request to an ICCF, where the first call hold request is designed to hold a first call between the UE and a second UE, the UE performs the first call with the second UE through a first CS access call leg, and the first CS access call leg supports a first media type;
a calling unit, adapted to send a call request to the ICCF after the holding unit sends the first call hold request, where the media type in the call request is a second media type; and
a controlling unit, adapted to: release the first CS access call leg after the calling unit sends the call request, and initiate a second CS access call leg with the ICCF, where the second CS access call leg supports the second media type.

After reading the foregoing embodiments, those skilled in the art are clearly aware that the embodiments of the present invention may be implemented through hardware, or through software in addition to a necessary universal hardware platform, but the latter is preferred in most circumstances. Therefore, the contributions made by the technical solution under the present invention as against the prior art may be partially or completely embodied as a software product. The software product may be stored in a storage medium such as ROM/RAM, magnetic disk, or CD-ROM, and incorporates several instructions for instructing a computer device (for example, personal computer, server, or network device) to execute the method specified in each embodiment of the present invention or a part of the embodiment.

Although the invention is described through some exemplary embodiments, the invention is not limited to such embodiments. It is apparent that those skilled in the art can make modifications and variations to the invention without departing from the scope of the invention. The invention is intended to cover the modifications and variations provided that they fall in the scope of protection defined by the following claims or their equivalents.

## Claims

1. A call holding method under an IP Multimedia Subsystem, IMS, centralized service, comprising:
performing, by a first User Equipment, UE, a first call with a second UE through a first Circuit Switched, CS, access call leg, wherein a signaling endpoint of the first CS access call leg is an IMS CS Control Function, ICCF, and the first CS access call leg supports a first media type;
sending, by the first UE, an IMS CS Control Channel, ICCC, request to hold the first call;
sending, by the first UE, an ICCC request to initiate a second call with a third UE; and
performing the second call with the third UE through a second CS access call leg, wherein the second CS access call leg supports a second media type;
wherein the sending, by the first UE, the ICCC request to initiate the second call with the third UE comprises:
sending a call request for calling the third UE to the ICCF via the ICCC; and by the first UE, changing the first media type supported by the first CS access call leg to the second media type and obtain the second CS access call leg, after the ICCF sends the call request to the third UE and controls the first CS access call leg to set up a media connection with the third UE; or
sending a call request for calling the third UE to the ICCF via the ICCC; and by the first UE, changing the first media type supported by the first CS access call leg to the second media type, and obtaining the second CS access call leg, wherein the ICCF is adapted to send the call request to the third UE, and control the second CS access call leg to set up a media connection with the third UE after the first UE changes the first media type supported by the first CS access call leg to the second media type.

2. The method of claim 1, **characterized in that** the sending, by the first UE, the ICCC request to initiate the second call with the third UE comprises:
sending a call request for calling the third UE to the ICCF via the ICCC, wherein the ICCF is adapted to change a CS call mode so as to change the media type supported by the first CS access call leg to the second media type and obtain the second CS access call leg, and send the call request to the third UE and control the second CS access call leg to set up a media connection with the third UE.

3. The method of any one of claims 2-5, **characterized in that** the sending, by the first UE, the ICCC request to initiate the second call with the third UE further comprises:
by the first UE, initiating release of the first CS access call leg and initiating the second CS access call leg with the ICCF after the ICCF sends the call request to the third UE, wherein the ICCF is adapted to control the second CS access call leg to set up a media connection with the third UE after the first UE sets up the second CS access call leg.

4. The method of any one claims 2-5, **characterized in that** the ICCF is adapted to send the call request to the third UE first, initiate release of the first CS access call leg and initiate the second CS access call leg, and control the second CS access call leg to set up a media connection with the third UE.

5. The method of any one of claims 2-5, **characterized in that** the sending, by the first UE, the ICCC request to initiate the second call with the third UE further comprises:
by the first UE, initiating release of the first CS access call leg, and initiating the second CS access call leg with the ICCF, wherein the ICCF is adapted to send the call request to the third UE after the first UE initiates the second CS access call leg, and control the second CS access call leg to set up a media connection with the third UE.

6. The method of any one of claims 2-5, **characterized in that** the ICCF is adapted to initiate release of the first CS access call leg and initiate the second CS access call leg first, send the call request to the third UE, and control the second CS access call leg to set up a media connection with the third UE.

## Patentansprüche

1. Anrufhalteverfahren unter einem zentralisierten Dienst des IP Multimedia Subsystem IMS, umfassend:
Durchführen eines ersten Anrufs durch ein erstes Benutzergerät UE mit einem zweiten UE durch einen ersten leitungsvermittelten bzw. CS-Zugangsanrufzweig,
wobei ein Signalisierungsendpunkt des ersten CS-Zugangsanrufzweigs eine IMS CS Control Function ICCF ist und der erste CS-Zugangsanrufzweig einen ersten Medientyp unterstützt;
Senden einer Anforderung des IMS CS Control Channel ICCC durch das erste UE zum Halten des ersten Anrufs;
Senden einer ICCC-Anforderung durch das erste UE zum Einleiten eines zweiten Anrufs mit einem dritten UE; und
Durchführen des zweiten Anrufs mit dem dritten UE durch einen zweiten CS-Zugangsanrufzweig, wobei der zweite CS-Zugangsanrufzweig einen zweiten Medientyp unterstützt;
wobei das Senden der ICCC-Anforderung durch das erste UE zum Einleiten des zweiten Anrufs mit dem dritten UE Folgendes umfasst:
Senden einer Anrufanforderung zum Anrufen des dritten UE zu der ICCF über den ICCC; und Umändern des durch den ersten CS-Zugangsanrufzweig unterstützten ersten Medientyps durch das UE in den zweiten Medientyp und Erhalten des zweiten CS-Zugangsanrufzweigs, nachdem die ICCF die Anrufanforderung zu dem dritten UE sendet und den ersten CS-Zugangsanrufzweig steuert, um eine Medienverbindung mit dem dritten UE aufzubauen; oder
Senden einer Anrufanforderung zum Anrufen des dritten UE zu der ICCF über den ICCC; und Umändern des durch den ersten CS-Zugangsanrufzweig unterstützten ersten Medientyps durch das erste UE in den zweiten Medientyp und Erhalten des zweiten CS-Zugangsanrufzweigs, wobei die ICCF dafür ausgelegt ist, die Anrufanforderung zu dem dritten UE zu senden und den zweiten CS-Zugangsanrufzweig zu steuern, um eine Medienverbindung mit dem dritten UE aufzubauen, nachdem das erste UE den durch den ersten CS-Zugangsanrufzweig unterstützten ersten Medientyp in den zweiten Medientyp umändert.

2. Verfahren nach Anspruch 1, **dadurch gekennzeichnet, dass** das Senden der ICCC-Anforderung durch das erste UE zum Einleiten des zweiten Anrufs mit dem dritten UE Folgendes umfasst:
Senden einer Anrufanforderung zum Anrufen des dritten UE zu der ICCF über den ICCC, wobei die ICCF dafür ausgelegt ist, einen CS-Anrufmodus zu ändern, um so den durch den ersten CS-Zugangsanrufzweig unterstützten Medientyp in den zweiten Medientyp umzuändern, und den zweiten CS-Zugangsanrufzweig zu erhalten und die Anrufanforderung zu dem dritten UE zu senden und den zweiten CS-Zugangsanrufzweig zu steuern, um eine Medienverbindung mit dem dritten UE aufzubauen.

3. Verfahren nach Anspruch 1 oder 2, **dadurch gekennzeichnet, dass** das Senden der ICCC-Anforderung durch das erste UE zum Einleiten des zweiten Anrufs mit dem dritten UE ferner Folgendes umfasst:
Einleiten der Freigabe des ersten CS-Zugangsanrufzweigs durch das erste UE und
Einleiten des zweiten CS-Zugangsanrufzweigs mit der ICCF, nachdem die ICCF die Anrufanforderung zu dem dritten UE sendet, wobei die ICCF dafür ausgelegt ist, den zweiten CS-Zugangsanrufzweig zu steuern, um eine Medienverbindung mit dem dritten UE aufzubauen, nachdem das erste UE den zweiten CS-Zugangsanrufzweig aufbaut.

4. Verfahren nach Anspruch 1 oder 2, **dadurch gekennzeichnet, dass** die ICCF dafür ausgelegt ist, zuerst die Anrufanforderung zu dem dritten UE zu senden, die Freigabe des ersten CS-Zugangsanrufzweigs einzuleiten und den zweiten CS-Zugangsanrufzweig einzuleiten und den zweiten CS-Zugangsanrufzweig zu steuern, um eine Medienverbindung mit dem dritten UE aufzubauen.

5. Verfahren nach Anspruch 1 oder 2, **dadurch gekennzeichnet, dass** das Senden der ICCC-Anforderung durch das erste UE zum Einleiten des zweiten Anrufs mit dem dritten UE ferner Folgendes umfasst:
Einleiten der Freigabe des ersten CS-Zugangsanrufzweigs durch das erste UE und
Einleiten des zweiten CS-Zugangsanrufzweigs mit der ICCF, wobei die ICCF dafür ausgelegt ist, die Anrufanforderung zu dem dritten UE zu senden, nachdem das erste UE den zweiten CS-Zugangsanrufzweig einleitet, und den zweiten CS-Zugangsanrufzweig zu steuern, um eine Medienverbindung mit dem dritten UE aufzubauen.

6. Verfahren nach Anspruch 1 oder 2, **dadurch gekennzeichnet, dass** die ICCF dafür ausgelegt ist, die Freigabe des ersten CS-Zugangsanrufzweigs einzuleiten und zuerst den zweiten CS-Zugangsanrufzweig einzuleiten, die Anrufanforderung zu dem dritten UE zu senden und den zweiten CS-Zugangsanrufzweig zu steuern, um eine Medienverbindung mit dem dritten UE aufzubauen.

## Revendications

1. Procédé de mise en garde d'appel dans un service centralisé de Sous-Système Multimédia IP, IMS, comprenant :
l'exécution, par un premier Equipement Utilisateur, UE, d'un premier appel avec un second UE par le biais d'un premier tronçon d'appel d'accès à Commutation par Circuits, CS, dans lequel un point final de signalisation du premier tronçon d'appel d'accès CS est une Fonction de Commande CS IMS, ICCF, et le premier tronçon d'appel d'accès CS supporte un premier type de support ;
l'envoi, par le premier UE, d'une requête de Canal de Commande CS IMS, ICCC,
demandant la mise en garde du premier appel ;
l'envoi, par le premier UE, d'une requête ICCC demandant le lancement d'un second appel avec un troisième UE, et
l'exécution du second appel avec le troisième UE par le biais d'un second tronçon d'appel d'accès CS, le second tronçon d'appel d'accès CS supportant un second type de support ;
dans lequel l'envoi, par le premier UE, de la requête ICCC de lancement du second appel avec le troisième UE comprend :
l'envoi d'une requête d'appel demandant l'appel du troisième UE à l'ICFF par l'intermédiaire de l'ICCC ; et par le premier UE, le changement du premier type de support supporté par le premier tronçon d'appel d'accès CS en le second type de support et l'obtention du second tronçon d'appel d'accès CS, après que l'ICCF envoie la requête d'appel au troisième UE et commande au premier tronçon d'appel d'accès CS d'établir une connexion multimédia avec le troisième UE ; ou
l'envoi d'une requête d'appel demandant l'appel du troisième UE à l'ICCF par l'intermédiaire de l'ICCC ; et par le premier UE, le changement du premier type de support supporté par le premier tronçon d'appel d'accès CS en le second type de support, et l'obtention du second tronçon d'appel d'accès CS, l'ICCF étant adaptée pour envoyer la requête d'appel au troisième UE et commander au second tronçon d'appel d'accès CS d'établir une connexion multimédia avec le troisième UE après que le premier UE change le premier type de support supporté par le premier tronçon d'appel d'accès CS en le second type de support.

2. Procédé selon la revendication 1, **caractérisé en ce que** l'envoi, par le premier UE, de la requête ICCC demandant le lancement du second appel avec le troisième UE comprend :
l'envoi d'une requête d'appel demandant l'appel du troisième UE à l'ICCF par l'intermédiaire de l'ICCC, l'ICCF étant adaptée pour changer un mode d'appel CS afin de changer le type de support supporté par le premier tronçon d'appel d'accès CS en le second type de support et obtenir le second tronçon d'appel d'accès CS, et envoyer la requête d'appel au troisième UE et commander au second tronçon d'appel d'accès CS d'établir une connexion multimédia avec le troisième UE.

3. Procédé selon la revendication 1 ou 2, **caractérisé en ce que** l'envoi, par le premier UE, de la requête ICCC demandant le lancement du second appel avec le troisième UE comprend en outre :
par le premier UE, le lancement de la libération du premier tronçon d'appel d'accès CS et le lancement du second tronçon d'appel d'accès CS avec l'ICCF après que l'ICCF envoie la requête d'appel au troisième UE, l'ICCF étant adaptée pour commander au second tronçon d'appel d'accès CS d'établir une connexion multimédia avec le troisième UE après que le premier UE établit le second tronçon d'appel d'accès CS.

4. Procédé selon la revendication 1 ou 2, **caractérisé en ce que** l'ICCF est adaptée pour envoyer la requête d'appel au troisième UE d'abord, lancer la libération du premier tronçon d'appel d'accès CS et lancer le second tronçon d'appel d'accès CS et commander au second tronçon d'appel d'accès CS d'établir une connexion multimédia avec le troisième UE.

5. Procédé selon la revendication 1 ou 2, **caractérisé en ce que** l'envoi, par le premier UE, de la requête ICCC demandant le lancement du second appel avec le troisième UE comprend en outre :
par le premier UE, le lancement de la libération du premier tronçon d'appel d'accès CS, et le lancement du second tronçon d'appel d'accès CS avec l'ICCF, l'ICCF étant adaptée pour envoyer la requête d'appel au troisième UE après que le premier UE lance le second tronçon d'appel d'accès CS, et commander au second tronçon d'appel d'accès CS d'établir une connexion multimédia avec le troisième UE.

6. Procédé selon la revendication 1 ou 2, **caractérisé en ce que** l'ICCF est adaptée pour lancer la libération du premier tronçon d'appel d'accès CS et lancer le second tronçon d'appel d'accès CS d'abord, envoyer la requête d'appel au troisième UE, et commander au second tronçon d'appel d'accès CS d'établir une connexion multimédia avec le troisième UE.
